Europäisches Patentamt

European Patent Office

Office européen des brevets

(19)

(11) Publication number: **0 174 389**
**B1**

(12) # EUROPEAN PATENT SPECIFICATION

(45) Date of publication of patent specification: **18.05.88**

(51) Int. Cl.⁴: **F 16 K 1/22,** F 02 D 11/04, F 02 B 31/00

(21) Application number: **84110956.4**

(22) Date of filing: **13.09.84**

(54) **A device for driving a rotary valve.**

(43) Date of publication of application:
**19.03.86 Bulletin 86/12**

(45) Publication of the grant of the patent:
**18.05.88 Bulletin 88/20**

(84) Designated Contracting States:
**DE FR GB**

(56) References cited:
**WO-A-80/02860**
**GB-A- 534 124**
**US-A-4 308 829**
**US-A-4 467 750**

(73) Proprietor: **TOYOTA JIDOSHA KABUSHIKI KAISHA**
**1, Toyota-cho Toyota-shi**
**Aichi-ken 471 (JP)**

(72) Inventor: **Hattori, Kyo**
**c/o TOYOTA JIDOSHA KABUSHIKI KAISHA 1, Toyota-cho**
**Toyota-shi Aichi-ken (JP)**
Inventor: **Sakurai, Kazuhiro**
**c/o TOYOTA JIDOSHA KABUSHIKI KAISHA 1, Toyota-cho**
**Toyota-shi Aichi-ken (JP)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

## Description

The present invention relates to a device for driving a rotary valve as described in the preamble of claim 1.

In a prior art rotary valve of that kind, as disclosed in US—A—4 467 750, the straight portion of said link means is a linearly movable drive shaft. The tips of said arms and the drive shaft are pivotally interconnected via a pivot pin.

Use of such pivot pins, however, is disadvantageous in that the connecting portion between the tip of the arm and the drive shaft loosens when the rotary valve is used for a long time. In addition, when a large number of rotary valves are to be controlled, the number of the pivotally connecting portions increases and, thus, the construction of the link mechanism becomes complicated.

An object of the present invention is to provide a rotary valve drive device which is capable of preventing the link means from loosening over long use of the rotary valve and which has a simple construction enabling easy assembly.

According to the present invention, there is provided a rotary valve device as described in the characterizing portion of claim 1.

Further preferred embodiments are characterized by appendent claims 2 to 16.

The use of a rotary valve device according to the invention for controlling intake passages of an internal combustion engine is the object of claims 17 to 20.

The present invention will be more fully understood from the description of preferred embodiments of the invention set forth below, together with the accompanying drawings, in which:

Fig. 1 is a plan view of a first embodiment of a rotary valve drive device according to the present invention;

Fig. 2 is an enlarged view of a portion of the rotary valve drive device illustrated in Fig. 1;

Fig. 3 is a cross-sectional side view of Fig. 2;

Fig. 4 is a cross-sectional side view of a portion of a second embodiment according to the present invention;

Fig. 5 is a side view of the cap illustrated in Fig. 4;

Fig. 6 is a cross-sectional side view of a portion of a third embodiment according to the present invention;

Fig. 7 is a plan view of a portion of a fourth embodiment according to the present invention;

Fig. 8 is a plan view of a portion of a fifth embodiment according to the present invention;

Fig. 9 is a plan view of a sixth embodiment according to the present invention;

Fig. 10 is a plan view of a seventh embodiment according to the present invention; and

Fig. 11 is a cross-sectional plan view of an internal combustion engine.

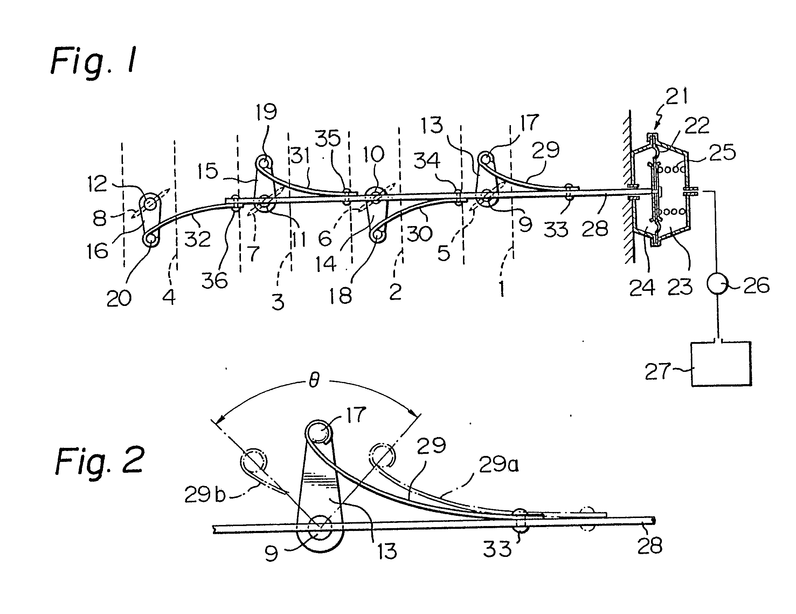

Referring to Fig. 1, reference numerals 1, 2, 3, and 4 designate gas passages; 5, 6, 7, and 8 rotary valves respectively arranged in the gas passages 1, 2, 3, and 4 and shaped in the form of butterfly valves; 9, 10, 11, and 12 valve shafts of the respective rotary valves 5, 6, 7, and 8; 13, 14, 15, and 16 arms fixed onto the end portions of the corresponding valve shafts 9, 10, 11, and 12; 17, 18, 19, and 20 pins respectively fixed onto the tips of the arms 13, 14, 15, and 16; and 21 an actuator. The valve shafts 9, 10, 11, and 12 arranged in a straight line.

The actuator 21 comprises a vacuum chamber 23 and an atmospheric pressure chamber 24, separated by a diaphragm 22. A compression spring 25 for biasing the diaphragm 22 is inserted into the vacuum chamber 23. The vacuum chamber 23 is selectively connected to the outside air or a vacuum source 27 via a control valve 26.

One end of a control rod 28 is fixed onto the diaphragm 22. This control rod 28 linearly extends above the valve shafts 9, 10, 11, and 12. The ends of plate springs 29, 30, 31, and 32 which are slightly bent are rigidly fixed onto the control rod 28 by means of screws or rivets 33, 34, 35, and 36. The other ends of the plate springs 29, 30, 31, and 32 are respectively cylindrically wound and rotatably fitted onto the pins 17, 18, 19, and 20.

The pins 17, 18, 19, and 20 have the same shape, and the plate springs 29, 30, 31, and 32 have the same shape. Consequently, the constructions of only the pin 17 and the plate spring 29 of the rotary valve 5 will be hereinafter described.

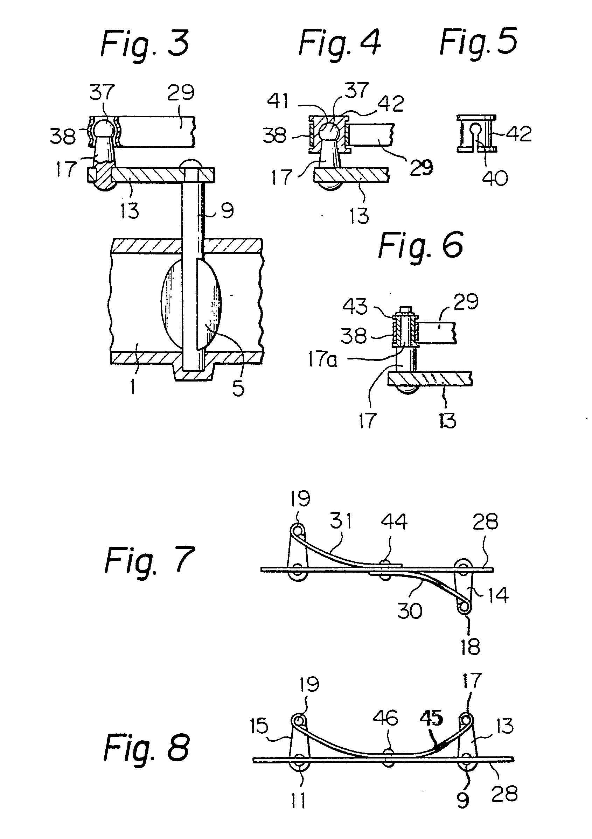

Referring to Figs. 2 and 3, a lower end of the pin 17 is fixed onto the tip of the arm 13. A head 37 of the pin 17 is shaped in the form of a sphere. As mentioned above, the plate spring 29 has a hollow cylindrical tip portion 38. The inner wall of the central portion of the hollow cylindrical tip portion 38 is shaped in the form of a partial sphere which is able to receive the spherical head 37 therein. Thus, the hollow cylindrical tip portion 38 of the plate spring 29 is fitted onto the sphere head 37 by pushing down the hollow cylindrical tip portion 38 onto the spherical head 37. If the hollow cylindrical tip portion 38 is fitted onto the spherical head 37, the hollow cylindrical tip portion 38 is held by its own resiliency by the spherical head 37. In addition, since the hollow cylindrical tip portion 38 is continuously pressed onto the spherical head 37, there is no danger that the pivotable connection between the hollow cylindrical tip portion 38 and the spherical head 37 will loosen.

Returning to Fig. 1, the arms 13 and 15 extend in a direction opposite to the arms 14 and 16 with respect to the control rod 28. Thus, the plate spring 29 and 31 are arranged on a side opposite to the plate springs 30 and 32 with respect to the control rod 28. When the vacuum chamber 23 of the actuator 21 is connected to the vacuum source 17 via the control valve 26, the diaphragm 22 moves toward the right in Fig. 1 against the compression spring 25. As a result of this, the rotary valves 5 and 7 are rotated in the clockwise direction, and the rotary valves 6 and 8 are rotated in the counter-clockwise direction. Thus, the rotary valves 5 and 7 close the corresponding gas passages 1 and 3, and the rotary valves 6 and 8 open the corresponding gas passages 2 and 4 to the maximum extent. The position of the plate spring 29 at this time is indicated by the dash-dotted line 29a in Fig. 2.

When the vacuum chamber 23 of the actuator 21 is open to the outside air via the control valve 26, the diaphragm 22 moves toward the left in Fig. 1 due to the spring force of the compression spring 25. As a result, the rotary valves 5 and 7 are rotated in the counterclockwise direction, and the rotary valves 6 and 8 are rotated in the clockwise direction. Thus, the rotary valves 5 and 7 open the gas passages 1 and 3 to the maximum extent, and the rotary valves 6 and 8 close the gas passages 2 and 4. The position of the plate spring 29 at this time is indicated by the dash-dotted line 29b. Consequently, from Fig. 2, it will be understood that the arm 13 rotates over the angular range θ while bending the plate spring 29 outward. In the embodiment illustrated in Fig. 1, the same number of plate springs 29 and 31 and 30 and 32 are arranged on each side of the control rod 28. Therefore, it is possible to linearly move the control rod 28 without supporting the intermediate portion thereof.

In the embodiment illustrated in Fig. 3, the hollow cylindrical tip portion 28 of the plate spring 29 is directly fitted onto the spherical head 37 of the pin 17. However, as illustrated in Figs. 4 and 6, the hollow cylindrical tip portion 38 may be indirectly fitted onto the pin 17. That is, in a second embodiment illustrated in Figs. 4 and 5, a cap 42 made of plastic and having a slot 40 (Fig. 5) and a spherical recess 41 (Fig. 4) is fitted onto the spherical head 37 of the pin 17, and the hollow cylindrical tip portion 38 of the plate spring 29 is fitted onto the circumferential outer wall of the cap 42. In addition, in a third embodiment illustrated in Fig. 6, the pin 17 has a reduced diameter upper end portion 172. A hollow cylindrical sleeve 43 is fitted onto the reduced diameter upper end portion 17a, and the hollow cylindrical tip portion 38 of the plate spring 29 is fitted onto the circumferential outer wall of the hollow cylindrical sleeve 43.

Figures 7 through 10 illustrate various embodiments. In Figs. 7 through 10, similar components are indicated with the same reference numerals used in Fig. 1.

In a fourth embodiment illustrated in Fig. 7, the inner ends of a pair of the plate springs 30 and 31 are fixed onto the control rod 28 by means of a single screw or rivet 44. Consequently, in this embodiment, it is possible to reduce the number of the screws or rivets.

In a fifth embodiment illustrated in Fig. 8, the middle portion of the plate spring 45 is fixed onto the control rod 28 by means of a screw or rivet 46, and the opposed ends of the plate spring 45 are connected to the pins 17 and 19 of the separate arms 13 and 15, respectively. Consequently, in this embodiment, it is possible to reduce both the number of the plate springs and the number of the screws or rivets.

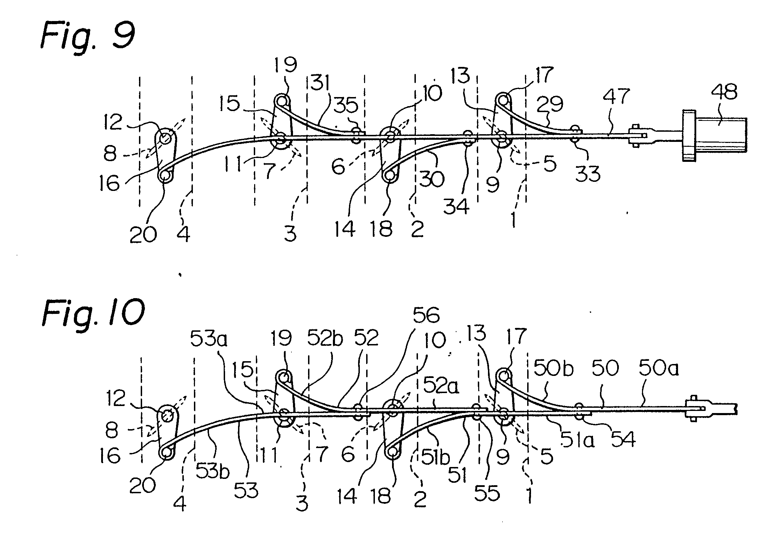

In a sixth embodiment illustrated in Fig. 9, instead of using a control rod, a plate spring 47 having a long length is used. One end of the plate spring 47 is connected to the pin 20 of the rotary valve 8, and the other end of the plate spring 47 is connected to an actuator 48 formed by a solenoid. The remaining plate springs 29, 30, and 31 are fixed onto the plate spring 47 by means of the screws or rivets 33, 34, and 35. In this embodiment, there is an advantage that no control rod is necessary.

In a seventh embodiment illustrated in Fig. 10, each of plate springs 50, 51, 52, and 53 comprises straight extending portions 50a, 51a, 52a, and 53a, and bending portions 50b, 51b, 52b, and 53b, respectively. These plate springs 50, 51, 52, and 53 have the same shape. The straight extending portions 50a, 51a, 52a, and 53a of the plate springs 50, 51, 52, and 53 are arranged on the straight line, and the adjacent straight extending portions 50a, 51a, 52a, and 53a are interconnected to each other by means of screws or rivets 54, 55, and 56. Consequently, also in this embodiment, there is an advantage that no control rod is necessary. In the embodiments illustrated in Figs. 9 and 10, all the rotary valves 5, 6, 7, and 8 open to the maximum extent at the same time and close at the same time.

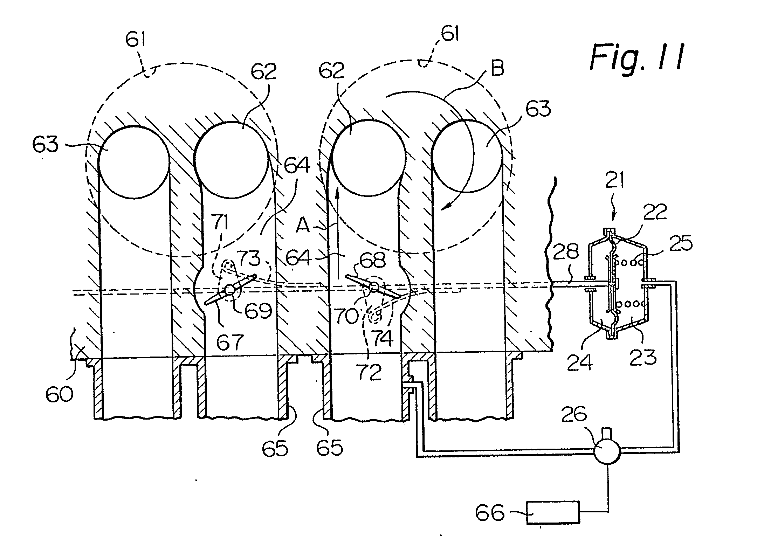

Figure 11 illustrates the case where the rotary valve drive device illustrated in Fig. 1 is applied to an internal combustion engine. Referring to Fig. 11, reference numeral 60 designates an engine body, 61 cylinders, 62 intake valves, 63 exhaust valves, 64 intake ports, and 65 intake pipes. The vacuum chamber 23 of the actuator 21 is connected to the interior of the intake pipe 65 via the control valve 26 actuated in response to the output signal of an engine speed sensor or a vacuum sensor 66. Intake air control valves 67 and 68 are arranged in the corresponding intake ports 64 so that the valve shafts 69 and 70 of the intake air control valves 67 and 68 are located eccentrically relative to the central axis of the intake ports 64. Arms 71 and 72 are fixed onto the valve shafts 69 and 70, respectively, and the tips of the arms 71 and 72 are connected to the control rod 28 via corresponding plate springs 73 and 74.

When the engine speed is lower than a predetermined speed or the level of vacuum in the intake pipe 65 is greater than a predetermined level, the vacuum chamber 23 of the actuator 21 is connected to the interior of the intake pipe 65 via the control valve 26. As a result, since vacuum acts on the vacuum chamber 23, the diaphragm 22 moves toward the right in Fig. 11 and, thus, the intake air control valves 67 and 68 are rotated to the maximum closing position. At this time, the air-fuel mixture flows at a high speed along one of the side walls of the intake port 64, as illustrated by the arrow A in Fig. 11. Thus, a strong swirl motion as illustrated by the arrow B in Fig. 11 is created in the cylinder 61. As a result of this, the burning velocity of the air-fuel mixture is increased and, thus, a stable combustion can be obtained.

When the engine speed is increased beyond the predetermined speed of the level of vacuum in the intake pipe 65 becomes smaller than the predetermined level, the vacuum chamber 23 of the actuator 21 is open to the outside air via the control valve 26. As a result, since the diaphragm 22 moves toward the left in Fig. 11, the intake air control valves 67 and 68 open to the maximum extent. Thus, when the engine is operating at a high speed under a heavy load, a high volumetric efficiency can be obtained.

According to the present invention, since the hollow cylindrical tip portion of the plate spring is pressed by its resiliency onto the pin fixed onto the tip of the arm of the rotary valve, there is no danger that the connecting portion between the plate spring and the pin will loosen over long use of the rotary valve. Therefore, it is possible to ensure reliable control of the rotary valve for a long time. In addition, since the construction of the rotary valve drive device is simple, it is possible to improve the reliability of the rotary valve drive device and reduce the manufacturing cost thereof. Furthermore, since it is not necessary to support the intermediate portion of the control rod, there is an advantage that no member for supporting the control rod is necessary.

**Claims**

1. A rotary valve device comprising:
a plurality of gas passages (1, 2, 3, 4);
a plurality of rotary valves (5, 6, 7, 8) arranged in said gas passages and aligned in a straight line, each of said rotary valves having a valve shaft (9, 10, 11, 12 respectively);
a plurality of arms (13, 14, 15, 16), each of said arms being fixed onto a corresponding valve shaft and having a projecting tip (17, 18, 19, 20 respectively);
an actuator (21) for controlling the opening operation of said rotary valves; and
link means interconnecting said actuator to the tips of said arms and comprising a linearly movable straight portion, which is connected to said actuator, characterized in that said straight portion (28; 47; 50a, 51a, 52a, 53a) extends along said straight line and said link means further comprises a plurality of outwardly extending resilient bending portions (29 to 32; 30, 31; 45; 50b, 51b, 52b, 53b; 73, 74), each connected at an inner end to the straight portion and pivotally connected at the other end of the tip (17 to 20) of a corresponding arm (13 to 16).

2. A rotary valve device according to claim 1, wherein said straight portion is formed by a rigid rod (28) and said bending portions are formed by plate springs (29 to 32).

3. A rotary valve device according to claim 1, wherein said straight portion and said bending portions are formed by plate springs (50 to 53).

4. A rotary valve device according to claim 3, wherein one of said plate springs is provided for each rotary valve and has a straight part (50a; 51a; 52a; 53a) and said bending portion (50b; 51b; 52b; 53b), said plate springs all having the same shape, said straight parts of the adjacent plate springs being interconnected so as to form said straight portion of the link means.

5. A rotary valve device according to claim 3, wherein one of the plate springs (47) which extends with its straight part along the entire straight line has a bending portion at its one end, at least a further shorter plate spring (29, 30, 31) being connected to said straight part of said long plate spring (47).

6. A rotary valve device according to one of the claims 1 to 5, wherein said arms comprise a first arm group (13, 15) and a second arm group (14, 16) which alternately extend in an opposite transverse direction with respect to said straight portion, said bending portions comprising a first group (29, 31; 50b, 52b) and a second group (30, 32; 51b, 53b) which alternately extend in an opposite transverse direction with respect to said straight portion.

7. A rotary valve device according to claim 6, wherein said bending portions extend from said straight portion in the same longitudinal direction.

8. A rotary valve device according to claim 7, wherein each of said bending portions is independently fixed onto said straight portion by fixing means such as screws and rivets (33 to 35; 44; 46; 54 to 56).

9. A rotary valve device according to claim 6, wherein said first group and said second group of said bending portions extend from said straight portion in an opposite longitudinal direction, said adjacent bending portions (30, 31) of the first group and the second group being fixed onto said straight portion by common fixing means (44) such as screws and rivets.

10. A rotary valve device according to claim 1, wherein said arms (13, 15) extend transversely in the same direction with respect to said straight portion, said bending portions (45) extending in the same transverse direction with respect to said straight portion.

11. A rotary valve device according to claim 10, wherein each of said bending portions is formed by a plate spring having opposed ends which are pivotally connected to the tips (17, 19) of the adjacent arms (13, 15), said plate spring (45) having a middle portion fixed onto said straight portion (28).

12. A rotary valve device according to one of the claims 1 to 11, wherein each of said arms has a pin (17 to 20) formed on the tip of the arm (13 to 16; 71, 72), and each of said bending portions has a resilient hollow cylindrical portion (38) formed on its outer end and fitted onto said pin (17, 17a).

13. A rotary valve device according to claim 12, wherein said pin has a spherical head (37), and said hollow cylindrical portion has a spherically-shaped circumferential inner wall for receiving said spherical head therein.

14. A rotary valve device according to claim 12, wherein said pin has a spherical head (37), and said hollow cylindrical portion (38) is fitted onto said spherical head via a cap (42) made of plastic.

15. A rotary valve device according to claim 14, wherein said cap has an axially extending slot (40) and a spherical recess (41) for receiving said spherical head (37) therein.

16. A rotary valve device according to claim 12, wherein said pin has a reduced diameter (17a) end portion, and said hollow cylindrical portion (38) is fitted onto said reduced diameter end portion via a hollow cylindrical sleeve (43).

17. The use of a rotary valve device according to one of the claims 1 to 16 for controlling intake passages of an internal combustion engine.

18. The use of a rotary valve device according to one of the claims 1 to 16 for controlling intake passages of an internal combustion engine wherein said actuator is actuated in response to an engine speed for closing said rotary valves when the engine speed is lower than a predetermined speed and for opening said rotary valves when the engine speed is higher than a predetermined speed.

19. The use of a rotary valve device according to one of the claims 1 to 16 for controlling the intake passages of an internal combustion engine, wherein said actuator is actuated in response to the level of vacuum in said intake passages for closing said rotary valves when the level of vacuum is greater than a predetermined level and for opening said rotary valves when the level of vacuum is smaller than the predetermined level.

20. The use of a rotary valve according to one of the claims 1 to 16 for controlling the intake passages of an internal combustion engine, wherein said valve shafts of said rotary valves are arranged eccentrically with respect to the central axes of said intake passages.

**Patentansprüche**

1. Drehklappenvorrichtung mit einer Vielzahl Gaskanäle (1, 2, 3, 4), einer Vielzahl Drehklappen (5, 6, 7, 8), die in den Gaskanälen angeordnet sind und auf einer geraden Linie fluchten, wobei jede Drehklappe eine Klappenwelle (9, 10, 11, 12) aufweist, einer Vielzahl Hebel (13, 14, 15, 16), wobei jeder Hebel auf einer entsprechenden Klappenwelle befestigt ist und eine vorspringende Spitze (17, 18, 19, 20) aufweist, einem Betätigungsorgan (21) zur Steuerung des öffnungsvorgangs der Drehklappen, und Gelenkelementen, die das Betätigungsorgan und die Spitzen der Hebel verbinden und zumindest einen linear bewegbaren geraden Abschnitt aufweisen, der mit dem Betätigungsorgan verbunden ist, dadurch gekennzeichnet, daß der gerade Abschnitt (28; 47; 50a, 51a, 52a, 53a) sich längs der geraden Linie erstreckt und daß die Gelenkelemente weiterhin eine Vielzahl sich auswärts erstreckender elastischer gebogener Abschnitte (29 bis 32; 30, 31; 45; 50b, 51b, 52b, 53b; 43, 74) aufweisen, von denen jeder an einem inneren Ende mit dem geraden Abschnitt verbunden und an dem anderen Ende drehbar mit der Spitze (17 bis 20) eines entsprechenden Hebels (13 bis 16) verbunden ist.

2. Drehklappenvorrichtung nach Anspruch 1, bei der der gerade Abschnitt durch eine steife Stange (28) und die gebogenen Abschnitte durch Blattfedern (29 bis 32) gebildet sind.

3. Drehklappenvorrichtung nach Anspruch 1, bei der der gerade Abschnitt und die gebogenen Abschnitte durch Blattfedern (50 bis 53) gebildet sind.

4. Drehklappenvorrichtung nach Anspruch 3, bei der eine der Blattfedern jeweils für eine Drehklappe vorgesehen ist und ein gerades Teil (50a; 51a; 52a; 53a) und den gebogenen Abschnitt (50b; 51b; 52b; 53b) aufweist, wobei alle Blattfedern die selbe Form aufweisen und die geraden Teile der einander benachbarten Blattfedern miteinander verbunden sind, so daß sie den geraden Abschnitt der Gelenkelemente bilden.

5. Drehklappenvorrichtung nach Anspruch 3, bei der eine der Blattfedern (47), die sich mit ihrem graden Teil längs der gesamten geraden Linie erstreckt, an ihrem einen Ende einen gebogenen Abschnitt aufweist, wobei zumindest eine weitere kürzere Blattfeder (29, 30, 31) mit dem geraden Teil der langen Blattfeder (47) verbunden ist.

6. Drehklappenvorrichtung nach einem der Ansprüche 1 bis 5, bei dem die Hebel eine erste Hebelgruppe (13, 15) und eine zweite Hebelgruppe (14, 16) aufweisen, die sich alternierend in eine entgegengesetzte Querrichtung in bezug auf den geraden Abschnitt erstrecken, wobei die gebogenen Abschnitte eine erste Gruppe (29, 31; 50b, 52b) und eine zweite Gruppe (30, 32; 51b, 53b) aufweisen, die sich alternierend in einer entgegengesetzten Querrichtung in bezug auf den geraden Abschnitt erstrecken.

7. Drehklappenvorrichtung nach Anspruch 6, bei der die gebogenen Abschnitte sich von dem geraden Abschnitt in derselben Längsrichtung erstrecken.

8. Drehklappenvorrichtung nach Anspruch 7, bei der jeder gebogene Abschnitt unabhängig auf dem geraden Abschnitt durch Befestigungselemente wie Schrauben und Niete (33 bis 35; 44; 46; 54 bis 56) befestigt ist.

9. Drehklappenvorrichtung nach Anspruch 6, bei dem die erste Gruppe und die zweite Gruppe der gebogenen Abschnitte sich vom geraden Abschnitt in entgegengesetzter Längsrichtung erstrecken, wobei die benachbarten gebogenen Abschnitte (30, 31) der ersten Gruppe und der zweiten Gruppe durch ein gemeinsames Befestigungselement (44) wie eine Schraube oder ein Niet an dem geraden Abschnitt befestigt sind.

10. Drehklappenvorrichtung nach Anspruch 1, bei der die Hebel (13, 15) sich quer in derselben Richtung in bezug auf den geraden Abschnitt erstrecken, wobei sich die gebogenen Abschnitte (45) in derselben Querrichtung in bezug auf den geraden Abschnitt erstrecken.

11. Drehklappenvorrichtung nach Anspruch 10, bei der jeder gebogene Abschnitt durch eine Blattfeder mit entgegengesetzten Enden gebildet ist, die drehbar mit den Spitzen (17, 19) der benachbarten Hebel (13, 15) verbunden ist, wobei die Blattfeder (45) einen Mittelabschnitt aufweist, der an dem geraden Abschnitt (28) befestigt ist.

12. Drehklappenvorrichtung nach einem der Ansprüche 1 bis 11, bei der jeder Hebel einen Stift (17 bis 20) aufweist, der auf der Spitze des Hebels (13 bis 16; 71, 72) ausgebildet ist, und jeder gebogene Abschnitt einen elastischen hohlzylindrischen Abschnitt (38) aufweist, der an seinem äußeren Ende geformt und auf den Stift (17, 17a) gepaßt ist.

13. Drehklappenvorrichtung nach Anspruch 12, bei der der Stift einen sphärischen Kopf (37) und der hohlzylindrische Abschnitt eine sphärisch geformte Innenumfangswand zur Aufnahme des sphärischen Kopfes darin aufweist.

14. Drehklappenvorrichtung nach Anspruch 12, bei der der Stift einen sphärischen Kopf (37) aufweist und der hohlzylindrische Abschnitt (38) über eine Haube (42), die aus Kunststoff hergestellt ist, auf den sphärischen Kopf gepaßt ist.

15. Drehklappenvorrichtung nach Anspruch 14, bei der die Haube einen sich axiale erstreckenden Schlitz (40) und eine sphärische Ausnehmung (41) zur Aufnahme des sphärischen Kopfes (37) darin aufweist.

16. Drehklappenvorrichtung nach Anspruch 12, bei der der Stift einen Endabschnitt (17a) mit verringertem Durchmesser aufweist und der hohlzylindrische Abschnitt (38) auf den Endabschnitt mit verringertem Durchmesser über eine hohlzylindrische Buchse (43) gepaßt ist.

17. Verwendung einer Dreklappenvorrichtung nach einem der Ansprüche 1 bis 16 zur Steuerung der Einlaßkanäle einer Brennkraftmaschine.

18. Verwendung einer Drehklappenvorrichtung nach einem der Ansprüche 1 bis 16 zur Steuerung der Einlaßkanäle einer Brennkraftmaschine, bei der das Betätigungsorgan entsprechend einer Motordrehzahl zur Schließung der Drehklappen betätigt wird, wenn die Motordrehzahl niedriger als eine vorgegebene Drehzahl ist, und zur Öffnung der Drehklappen betätigt wird wenn die Motordrehzahl größer als eine vorgegebene Drehzahl ist.

19. Verwendung einer Drehklappenvorrichtung nach einem der Ansprüche 1 bis 16 zur Steuerung der Einlaßkanäle einer Brennkraftmaschine, bei der das Betätigungsorgan entsprechend dem Unterdruckniveau in den Einlaßkanälen zur Öffnung der Drehklappen betätigt wird, wenn das Unterdruckniveau größer als ein vorgebenenes Niveau ist, und zur Öffnung der Drehklappen betätigt wird, wenn das Unterdruckniveau kleiner als ein vorgebenes Niveau ist.

20. Verwendung einer Drehklappenanordnung nach einem der Anssprüche 1 bis 16 zur Steuerung der Einlaßkanäle einer Brennkraftmaschine, bei der die Klappenwellen der Drehklappen in bezug auf die Mittelachsen der Einlaßkanäle exzentrisch angeordnet sind.

**Revendications**

1. Un dispositif de valve rotative comprenant:
une pluralité de passages de gaz (1, 2, 3, 4);
une pluralité de valves rotatives (5, 6, 7, 8) disposées dans lesdits conduits de gaz et alignées en ligne droite, chacune desdites valves rotatives comprenant un axe de valve (9, 10, 11, 12 respectivement);
une pluralité de bras (13, 14, 15, 16) dont chacun est fixé à l'arbre de valve correspondant et possède un doigt en saillie (17, 18, 19, 20 respectivement);
un organe d'actionnement (21) destiné à la commande d'ouverture desdites valves rotatives; et
un moyen de liaison reliant ledit dispositif d'actionnement aux doigts desdits bras et comprenant une partie rectiligne susceptible de se déplacer linéairement qui est reliée audit dispositif d'actionnement, caractérisé en ce que ladite partie rectiligne (28, 47, 50a, 51a, 52a, 53a) s'étend le long de la dite ligne droite et que le dit moyen de liaison comprend en outre une pluralité de parties (29 à 32, 30, 31, 45, 50b, 51b, 52b, 53b, 73, 74) courbes élastiques s'étendant vers l'extérieur, qui sont chacune reliées par une extrémité intérieure à la partie rectiligne et sont reliées de façon pivotante par l'autre extrémité au doigt (17 à 20) d'un bras correspondant (13 à 16).

2. Un dispositif de valve rotative selon la revendication 1, dans lequel ladite partie rectiligne est constituée par une tige rigide (28) et lesdites parties courbes, sont constitutées par des ressorts plats (29 à 32).

3. Un dispositif de valve rotative selon la revendication 1, dans lequel ladite partie droite et lesdites parties courbes sont constituées par des ressorts plats (50 à 53).

4. Un dispositif de valve rotative selon la revendication 3, dans lequel un seul desdits ressorts plats est affecté à chaque valve rotative et comporte une partie droite (50a, 51a, 52a, 53a) et ladite partie courbe (50b, 51b, 52b, 53b), lesdits ressorts plats présentant tous la même forme, lesdites parties rectilignes des ressorts plats adjacents étant reliées entre eux de façon à former une partie rectiligne de moyens de liaison.

5. Un dispositif de valve rotative selon la revendication 3, dans lequel l'un des ressorts plats (47) dont la partie rectiligne s'étend le long de l'ensemble de la ligne droite, comporte une partie courbe à l'une de ses extrémités, au moins un autre ressort plat plus court (29, 30, 31) étant relié à ladite partie rectiligne dudit ressort plat long (47).

6. Un dispositif de valve rotative selon l'une des revendications 1 à 5, dans lequel lesdits bras comprennent un premier groupe de bras (13, 15) et un second groupe de bras (14, 16) qui s'étendent alternativement dans une direction transversale opposée par rapport à ladite partie rectiligne, lesdites parties courbes comprenant un premier groupe (29, 31; 50b, 52b) et un second groupe (30, 32; 51b, 53b) qui s'étendent alternativement dans la direction transversale opposée par rapport à ladite partie rectiligne.

7. Un dispositif de valve rotative selon la revendication 6, dans lequel lesdites parties courbes s'étendent à partir de ladite partie rectiligne dans la même direction longitudinale.

8. Un dispositif de valve rotative selon la revendication 7, dans lequel chacune desdites parties courbes est fixée de façon indépendante à ladite partie rectiligne par des moyens de fixation tels que des vis et des rivets (33 à 35, 44, 46, 54 à 56).

9. Un dispositif de valve selon la revendication 6, dans lequel ledit premier groupe et ledit second groupe desdites parties courbes s'étendent à partir de ladite partie rectiligne dans une direction longitudinale opposée, lesdites parties courbes adjacentes (30, 31) du premier groupe et du second groupe étant fixées sur ladite partie rectiligne par des moyens de fixation courants (44) tels que des vis et des rivets.

10. Un dispositif de valve selon la revendication 1, dans lequel lesdits bras (13, 15) s'étendent transversalement dans la même direction par rapport à ladite partie rectiligne, lesdites parties courbes (45) s'étendant dans la même direction transversale par rapport à ladite partie rectiligne.

11. Un dispositif de valve rotative selon la revendication 10, dans lequel chacune desdites parties courbes est constituée par un ressort plat comportant des extrémités opposées qui sont reliées de façon pivotante aux doigts (17, 19) des bras adjacents (13, 15), ledit ressort plat (45) comportant une partie médiane fixée à ladite partie rectiligne (28).

12. Un dispositif de valve rotative selon l'une des revendications 1 à 11, dans lequel chacun desdits bras comporte une broche (17 à 20) formée sur le doigt du bras (13 à 16; 71, 72), et chacune desdites parties courbes comporte une partie cylindrique creuse élastique formée (38) à son extrémité externe et montée sur ladite broche (17, 17a).

13. Un dispositif de valve rotative selon la revendication 12, dans lequel ladite broche comporte une tête sphérique (37) et ladite partie cylindrique creuse comporte une paroi intérieure circonférentielle de forme sphérique destinée à recevoir ladite tête sphérique.

14. Un dispositif de valve rotative selon la revendication 12, dans lequel ladite broche comporte une tête sphérique (37) et ladite partie cylindrique creuse (38) est montée sur ladite tête sphérique grâce à un capuchon (42) fabriqué en matière plastique.

15. Un dispositif de valve rotative selon la revendication 14, dans lequel ledit capuchon comporte une fente (40) qui s'étend axialement et une cavité sphérique (41) destinée à recevoir ladite tête sphérique (37).

16. Un dispositif de valve rotative selon la revendication 12, dans lequel ladite broche présente une partie d'extrémité (17a) de diamètre réduit, et ladite partie cylindrique creuse (38) est montée sur ladite partie d'extrémité de diamètre réduit grâce à un manchon cylindrique creux (43).

17. L'utilisation d'un dispositif de valve rotative selon l'une des revendications 1 à 16, pour la commande de passages d'admission d'un moteur à combustion interne.

18. L'utilisation d'un dispositif de valve rotative selon l'une des revendications 1 à 16, pour la commande de passages d'admission d'un moteur à combustion interne, dans lequel ledit organe d'actionnement est actionné en réponse à une vitesse du moteur pour fermer lesdites valves rotatives lorsque la vitesse du moteur est inférieure à une vitesse prédéterminée et pour ouvrir lesdites valves rotatives quand la vitesse du moteur est supérieure à une vitesse déterminée.

19. L'utilisation d'un dispositif de valve rotative selon l'une des revendications 1 à 16, pour la commande des passages d'admission d'un moteur à combustion interne, dans lequel ledit dispositif d'actionnement est actionné en réponse au degré de vide régnant dans lesdits passages d'admission, pour fermer lesdites valves rotatives quand le degré de vide est supérieur à un degré prédéterminé et pour ouvrir lesdites valves rotatives quand le degré de vide est inférieur à un degré prédéterminé.

20. L'utilisation d'une valve rotative selon l'une des revendications 1 à 16 pour la commande des passages d'admission d'un moteur à combustion interne, dans lequel lesdits axes de valve desdites valves rotatives sont disposés de façon excentrique par rapport aux axes centraux desdits passages d'admission.



Fig. I

Fig. 2

0 174 389

*Fig. 3*

37 29
38
17
13 9
1 5

*Fig. 4*

41 37 42
38
17 29
13

*Fig. 5*

42
40

*Fig. 6*

43 29
38
17a
17 13

*Fig. 7*

19 31 44 28
30 14
18

*Fig. 8*

19 17
15 13
46 45
11 9 28

2

Fig. 9

Fig. 10

Fig. 11